# FASCICULE DE BREVET EUROPEEN

(11) **EP 2 883 784 B1**
(45) Date de publication et mention de la délivrance du brevet: **02.11.2016**
(21) Numéro de dépôt: 14195962.7
(22) Date de dépôt: 02.12.2014
(51) Int. Cl.: B62M 3/08

(54) **Pédale de cycle dynamométrique**
Dynamometrisches Fahrradpedal
Dynamometric cycle pedal

(30) Priorité: 10.12.2013 FR 1362326
(43) Date de publication de la demande: 17.06.2015
(73) Titulaire: COMMISSARIAT A L'ENERGIE ATOMIQUE ET AUX ENERGIES ALTERNATIVES, 75015 Paris (FR); DECATHLON, 59650 Villeneuve d'Ascq (FR)
(72) Inventeur: Gros, Jean-Philippe, 38120 LE FONTANIL CORNILLON (FR); Brulais, Sébastien, 38400 SAINT MARTIN D'HERES (FR); Despesse, Ghislain, 38100 GRENOBLE (FR)
(74) Mandataire: Thibon, Laurent

(56) Documents cités:
- EP-A1- 2 072 387
- EP-A1- 2 514 663
- WO-A1-2009/083787
- WO-A1-2012/038677
- WO-A1-2012/059812
- CN-Y- 201 189 940
- FR-A1- 2 878 328

## Description

### Domaine

La présente invention concerne une pédale de cycle dynamométrique utilisée pour mesurer les efforts appliqués par un cycliste sur la pédale lors du pédalage.

### Exposé de l'art antérieur

Les pédales dynamométriques permettent d'étudier les différentes variables du pédalage telles que la fréquence, la puissance utile, les forces appliquées par les membres inférieurs du cycliste, l'efficacité ou le rendement mécanique. Par puissance utile, on entend la quantité d'énergie fournie par le cycliste par unité de temps contribuant réellement à la mise en mouvement de la bicyclette. En particulier, la connaissance, à tout instant, de la puissance utile est susceptible d'aider les cyclistes à optimiser leur pratique. Elle leur permet notamment de mieux gérer leur effort et leur mouvement de pédalage, à l'entraînement ou pendant une course.

Le document CN201189940Y décrit une pédale selon le préambule de revendication 1.

La publication FR 2 878 328 décrit une pédale dynamométrique dans laquelle la pédale comprend un corps de pédale composé d'une partie supérieure pourvue de moyens de fixation d'une chaussure de cycliste et d'une partie inférieure comprenant un logement recevant un axe de pédale relié à une manivelle de pédalier. Les parties supérieure et inférieure du corps de pédale sont séparées l'une de l'autre par un interstice et reliées l'une à l'autre par des organes de liaison verticaux équipés de jauges de déformation adaptés à mesurer les efforts transversaux appliqués à la pédale.

Un inconvénient d'une telle pédale dynamométrique est qu'elle ne permet pas d'utiliser des capteurs d'effort classiques, notamment les capteurs d'effort présents dans les pèse-personnes, qui ont de nombreux avantages. En effet, leurs caractéristiques de fonctionnement sont bien maitrisées et ont bénéficié d'une longue mise au point. En outre, ces capteurs sont fabriqués à très grande échelle et à coût réduit. Toutefois, ces capteurs d'effort classiques sont trop encombrants pour pouvoir être utilisés sans modification pour former les organes de liaison verticaux de la pédale dynamométrique décrite dans la publication FR 2 878 328.

Il est donc nécessaire de concevoir un capteur d'effort spécifique de petite taille, chaque capteur étant composé de l'un des organes de liaison verticaux sur lequel est fixée la jauge de déformation. Le coût de mise au point et de fabrication d'un capteur d'effort spécifique limite l'utilisation d'une telle pédale dynamométrique au domaine du cyclisme professionnel de haut niveau. En outre, l'utilisation d'un capteur d'effort de petite taille dans une pédale de cycle peut être difficile. En effet, des effets de bord peuvent apparaître, notamment une inhomogénéité de la déformation de l'organe de liaison sous la jauge de déformation, ce qui peut rendre les mesures incorrectes. En outre, les efforts appliqués par le cycliste peuvent être importants par rapport aux dimensions du capteur d'effort. Les déformations relatives de l'organe de liaison peuvent alors être importantes de sorte que le capteur d'effort peut ne pas fonctionner dans sa plage de fonctionnement linéaire, ce qui complique le traitement du signal mesuré.

### Résumé

Ainsi, un objet d'un mode de réalisation est de prévoir une pédale de cycle dynamométrique palliant tout ou partie des inconvénients des solutions existantes.

Un objet d'un mode de réalisation est de prévoir une pédale de cycle dynamométrique moins complexe et moins onéreuse que les solutions existantes.

Un objet d'un mode de réalisation est que la pédale dynamométrique permet une mesure précise des efforts exercés par le cycliste sur la pédale.

Ainsi, un mode de réalisation prévoit une pédale de bicyclette comprenant un tube, monté libre en rotation autour d'un axe, et un corps de pédale comprenant au moins une première face sur laquelle un cycliste est susceptible d'exercer un effort, le corps de pédale étant relié au tube central par au moins un organe de liaison comprenant une première portion interposée entre le tube et la première face et équipée d'au moins une jauge de déformation.

Selon un mode de réalisation, la jauge de déformation s'étend au repos parallèlement à la première face.

Selon un mode de réalisation, l'organe de liaison est en contact avec le tube selon une première surface symétrique par rapport à un plan contenant l'axe de rotation du tube.

Selon un mode de réalisation, l'organe de liaison est relié au tube par au moins une vis dont l'axe croise l'axe de rotation du tube.

Selon un mode de réalisation, l'organe de liaison est en contact avec le tube selon une deuxième surface symétrique par rapport à un plan contenant l'axe de rotation du tube, les première et deuxième surfaces étant alignées parallèlement à l'axe de rotation.

Selon un mode de réalisation, le corps de pédale comprend une première partie et une deuxième partie, fixée à la première partie, le tube étant disposé entre les première et deuxième parties, les première et deuxième parties étant séparées du tube par un interstice.

Selon un mode de réalisation, la première partie comprend une première région plane et l'organe de liaison comprend une deuxième région plane, la première région plane étant en contact plan contre la deuxième région plane.

Selon un mode de réalisation, le corps de pédale comprend une deuxième face parallèle à la première face, la deuxième partie comprend une troisième région plane et l'organe de liaison comprend une quatrième région plane, la troisième région plane étant adaptée à venir en contact plan contre la quatrième région plane.

Selon un mode de réalisation, la première partie comprend une pièce centrale et un cadre, le cadre entourant au moins partiellement la deuxième partie, la deuxième partie étant fixée à la pièce centrale.

Selon un mode de réalisation, la pièce centrale et le cadre font partie d'une pièce monolithique.

Selon un mode de réalisation, l'organe de liaison comprend une deuxième portion annulaire entourant la première portion et reliée à une première extrémité de la première portion.

Selon un mode de réalisation, la pédale comprend au moins deux organes de liaison, chaque organe de liaison comprenant une première portion équipée d'au moins une jauge de déformation s'étendant au repos parallèlement à la première face, les deux organes de liaison étant alignés selon un axe parallèle à l'axe de rotation.

Selon un mode de réalisation, l'organe de liaison comprend des troisième et quatrième portions parallèles à la première portion et reliées à une deuxième extrémité de la première portion opposée à la première extrémité, la première portion s'étendant entre les troisième et quatrième portions, les troisième et quatrième portions étant fixées au tube.

Selon un mode de réalisation, la pédale comprend un circuit de traitement de données adapté à recevoir des signaux fournis par ladite jauge de déformation.

Selon un mode de réalisation, la pédale comprend des moyens de mesure d'au moins une accélération de la pédale.

Selon un mode de réalisation, la pédale comprend des moyens de mesure de l'angle d'inclinaison de ladite face.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective d'un mode de réalisation d'une pédale dynamométrique d'un cycle ;
les figures 2 à 4 sont des vues en perspective de certaines pièces de la pédale dynamométrique de la figure 1 ;
la figure 5 est une vue de côté de certaines pièces de la pédale dynamométrique ;
les figures 6 et 7 sont des vues en perspective de certaines pièces de la pédale dynamométrique selon une direction de visée sensiblement opposée à la direction de visée de la figure 1 ;
la figure 8 est une vue de dessus de certaines pièces de la pédale dynamométrique ; et
la figure 9 est une vue de côté de certaines pièces de la pédale dynamométrique.

### Description détaillée

De mêmes éléments ont été désignés par de mêmes références aux différentes figures qui ont été tracées sans respect d'échelle. Par souci de clarté, seuls les étapes et éléments utiles à la compréhension de l'invention ont été représentés et sont décrits. En particulier, la réalisation des autres pièces d'un pédalier d'un cycle n'a pas été détaillée, l'invention étant compatible avec toute réalisation habituelle d'un pédalier.

Selon un mode de réalisation, la pédale dynamométrique comprend un capteur d'effort classique comprenant un corps d'épreuve sur lequel sont fixées une ou plusieurs jauges de déformation dont les dimensions sont généralement de quelques centimètres de côté sur quelques millimètres d'épaisseur. Il s'agit, par exemple, de capteurs d'effort du type de ceux utilisés dans les pèse-personnes.

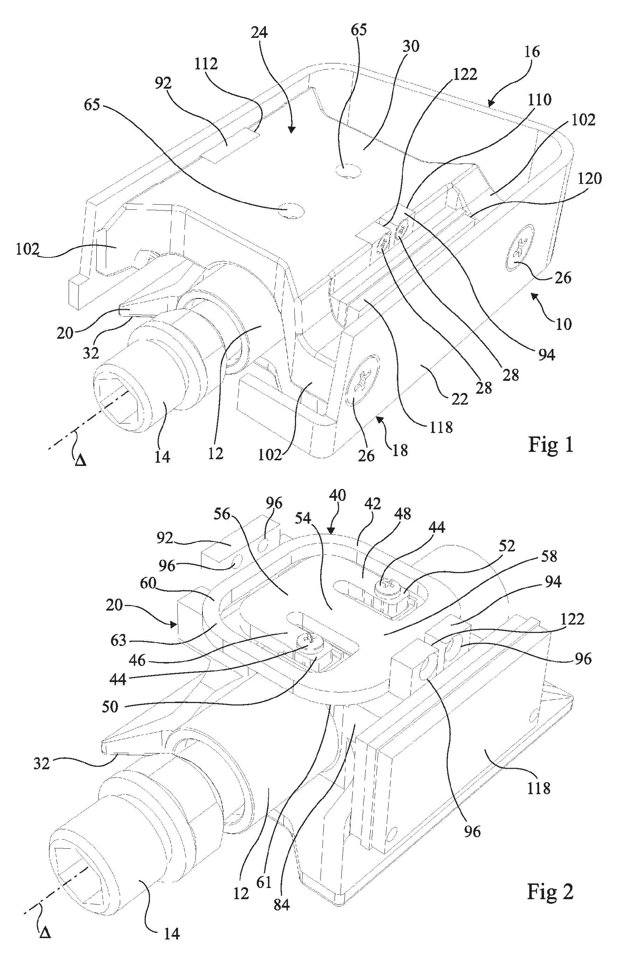

La figure 1 représente un mode de réalisation d'une pédale dynamométrique 10. La pédale 10 comprend un tube central 12 monté libre en rotation autour d'un axe 14. L'axe 14 est destiné à être relié à une extrémité à une manivelle, non représentée, d'un pédalier. L'axe de rotation du tube 12 est noté Δ.

Le tube central 12 est relié, par l'intermédiaire d'un organe de liaison, non visible en figure 1, à un corps de pédale 16 comportant une première partie 18 et une deuxième partie 20. De préférence, l'organe de liaison est une pièce distincte du tube central 12 et du corps de pédale 16. La première partie 18 du corps de pédale 16 comprend un cadre 22 fixé à une pièce centrale 24 par des vis 26, deux vis 26 étant visibles en figure 1. Le tube central 12 s'étend entre la pièce centrale 24 et la deuxième partie 20 du corps de pédale 16, le cadre 22 étant ouvert sur un côté pour permettre le passage de l'axe 14. La deuxième partie 20 du corps de pédale 16 est fixée à la pièce centrale 24 par l'intermédiaire de vis 28, deux vis 28 étant visibles en figure 1.

Les première et deuxième parties 18, 20 du corps de pédale 16 sont, par exemple, en aluminium, en acier ou en un matériau plastique éventuellement renforcé par des charges. A titre d'exemple, le cadre 22 est inscrit dans un parallélépipède dont le grand côté mesure quelques centimètres, par exemple de 5 cm à 15 cm, dont le petit côté mesure quelques centimètres, par exemple de 5 cm à 10 cm, et dont l'épaisseur mesure de 1 cm à 3 cm.

La pièce centrale 24 comprend une face externe 30. La deuxième partie 20 du corps de pédale 16 comprend une face externe 32, sensiblement parallèle à la face externe 30. Un revêtement, non représenté, peut être prévu autour des première et deuxième parties 18, 20 du corps de pédale 16. A titre d'exemple, il peut être prévu, sur l'une des faces externes 30, 32, un dispositif permettant de fixer automatiquement la chaussure d'un cycliste contre la pédale à l'aide d'une cale de fixation fixée à demeure sous la chaussure et coopérant avec une griffe avant fixe et une griffe arrière précontrainte montée basculante.

La figure 2 est une vue analogue à la figure 1, la première partie 18 du corps de pédale 16 n'étant pas représentée. Le capteur d'effort 40 comprend un corps d'épreuve 42 qui correspond à l'organe de liaison reliant le corps de pédalier 16 au tube central 10. Selon un mode de réalisation, l'organe de liaison 42 est fixé au tube central 12, par exemple par deux vis 44. Au moins une jauge de déformation, non visible en figure 2, est fixée à l'organe de liaison 42. L'organe de liaison 42 peut être réalisé en acier ou en un autre métal ou alliage métallique.

Dans le présent mode de réalisation, l'organe de liaison 42 a une structure symétrique par rapport à un plan perpendiculaire à l'axe de rotation Δ. L'organe de liaison 42 comprend deux pattes latérales parallèles 46, 48 reliées chacune au tube central 12 à une extrémité 50, 52 par l'une des vis 44. De préférence, l'axe de chaque vis 44 coupe l'axe D. La distance entre les axes des vis 44 est comprise entre 10 mm et 20 mm. L'organe de liaison 42 comprend une patte centrale 54, reliée à une extrémité 56 aux pattes latérales 46, 48, et s'étendant entre les pattes latérales 46, 48 parallèlement à celles-ci. Les pattes 46, 48, 54 s'étendent de façon sensiblement perpendiculaire à l'axe de rotation Δ. En l'absence d'efforts exercés par le cycliste sur la pédale, la patte 54 s'étend sensiblement selon un plan parallèle à l'axe de rotation Δ et parallèle aux faces 30, 32. La patte centrale 54 est reliée, à l'extrémité opposée 58, à une portion annulaire périphérique 60 entourant les pattes latérales 46, 48. La portion annulaire 60 comprend une face plane 61 orientée du côté du tube central 12 et une face plane 63 orientée du côté de la pièce centrale 24.

L'épaisseur de l'organe de liaison 42 est comprise entre 1 mm et 4 mm. La portion annulaire 60 est inscrite dans un carré dont le côté est compris entre 2,5 cm et 5 cm. La largeur de la patte centrale 54, mesurée parallèlement à l'axe de rotation Δ, est comprise entre 0,5 cm et 1,5 cm. La pièce centrale 24 comprend deux ouvertures 65 permettant l'accès aux vis 44.

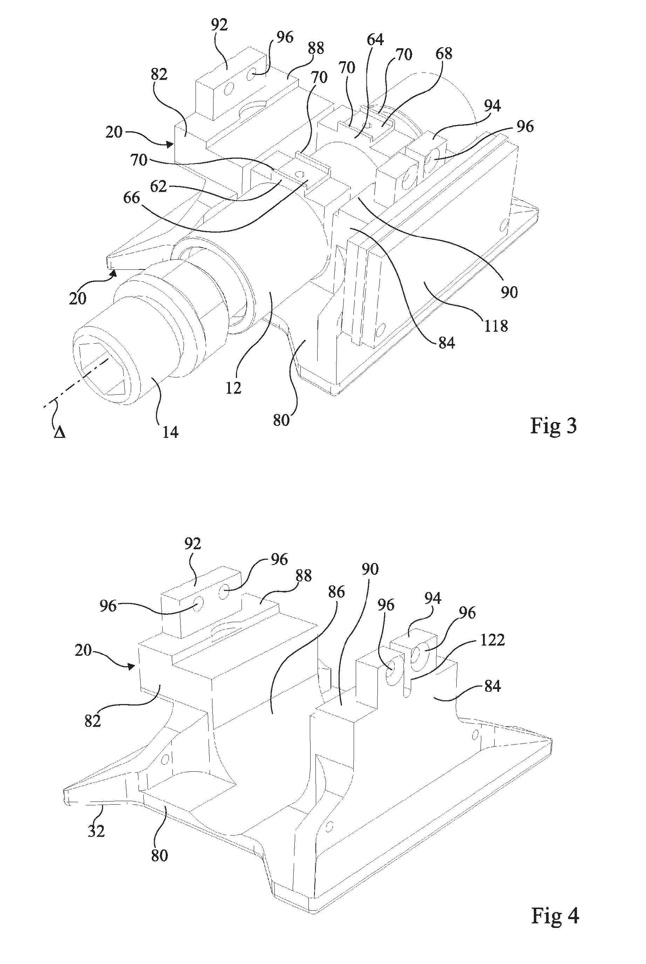

La figure 3 est une vue analogue à la figure 2, le capteur d'effort 40 n'étant pas représenté. Le tube central 12 comprend deux plots 62, 64. Chaque plot 62, 64 comprend une zone d'appui plane 66, 68, sensiblement parallèle à l'axe de rotation Δ. Les extrémités 50, 52 des pattes latérales 46, 48 reposent sur les zones d'appui 66, 68. De préférence, chaque zone d'appui 66, 68 est symétrique par rapport à un plan contenant l'axe de rotation Δ. L'organe de liaison 42 est en contact avec le tube central 12 seulement au niveau des zones d'appui 66, 68. Chaque zone d'appui 66, 68 est délimitée par des rebords 70 le long des côtés perpendiculaires à l'axe de rotation Δ. L'écartement entre les rebords 70 de la zone d'appui 66 et entre les rebords 70 de la zone d'appui 68 est strictement supérieur à la largeur des pattes 46, 48 de l'organe de liaison 42. Ces rebords 70 forment des butées qui empêchent le déplacement du capteur 40 selon une direction parallèle à l'axe de rotation Δ.

L'organe de liaison 42 peut avoir une forme différente de celle décrite précédemment en relation avec la figure 2. Toutefois, il est avantageux que chaque région de contact entre l'organe de liaison et le tube central 12 soit symétrique par rapport à un plan contenant l'axe de rotation Δ. En outre, il est avantageux que les régions de contact entre l'organe de liaison et le tube central 12 soient alignées parallèlement à l'axe de rotation Δ.

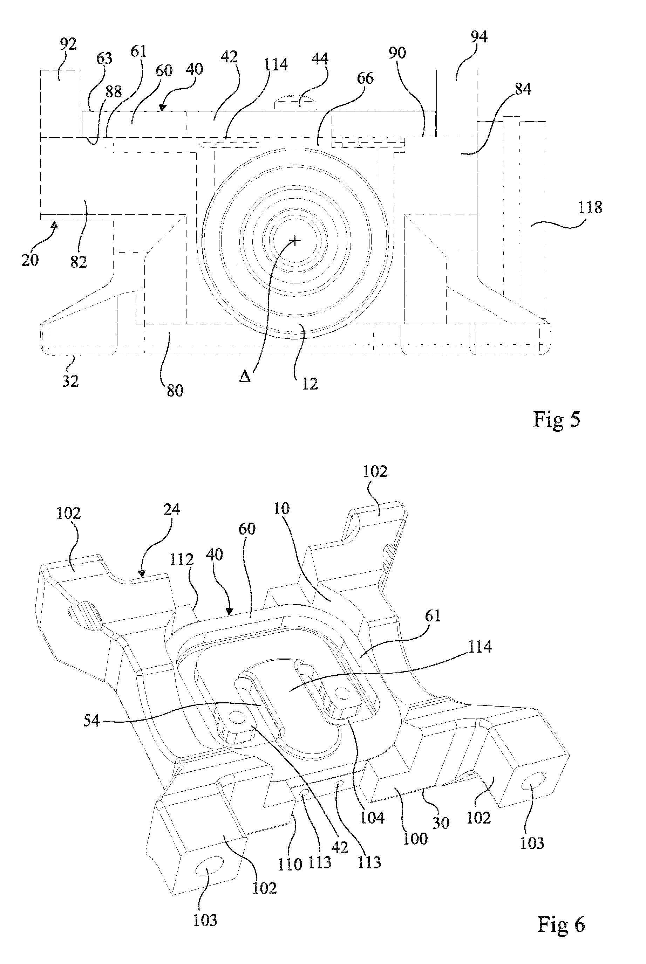

La figure 4 est une vue analogue à la figure 3, seule la partie inférieure 20 du corps de pédale 10 étant représentée, et la figure 5 est une vue de côté de la partie inférieure 20 du corps de pédale 10, du tube central 12 et du capteur d'effort 40.

La partie inférieure 20 du corps de pédale 16 comprend une base 80 et deux flasques 82, 84 se projetant depuis la base 80. Les deux flasques 82, 84 et la base 80 délimitent un logement 86 dans lequel est disposé le tube central 12. La face plane externe 32 est formée sur la base 80 du côté opposé au tube central 12. Chaque flasque 82, 84 comprend une région d'appui 88, 90 plane sensiblement parallèle à l'axe de rotation Δ. Les régions d'appui 88, 90 sont coplanaires et sont susceptibles de venir en appui contre deux parties de la portion annulaire 60 de l'organe de liaison 42 situées de part et d'autre des plots 62, 64 selon les efforts exercés par le cycliste sur le corps de pédale 16.

Un plot de fixation 92, 94 est prévu au sommet de chaque flasque 82, 84. Chaque plot de fixation 92, 94 est traversé par des ouvertures 96 pour le passage des vis 26, visibles en figure 1. L'écartement entre les plots 92, 94 est strictement supérieur aux dimensions de la portion annulaire 60 de l'organe de liaison 42. Les plots de fixation 92, 94 forment des butées empêchant le déplacement relatif entre le capteur d'effort 40 et le corps de pédale 16 selon une direction parallèle aux régions d'appui 88, 90 et perpendiculaire à l'axe de rotation Δ. Toutefois, dans des conditions normales de fonctionnement, les plots 92, 94 peuvent ne pas être en contact avec l'organe de liaison 42.

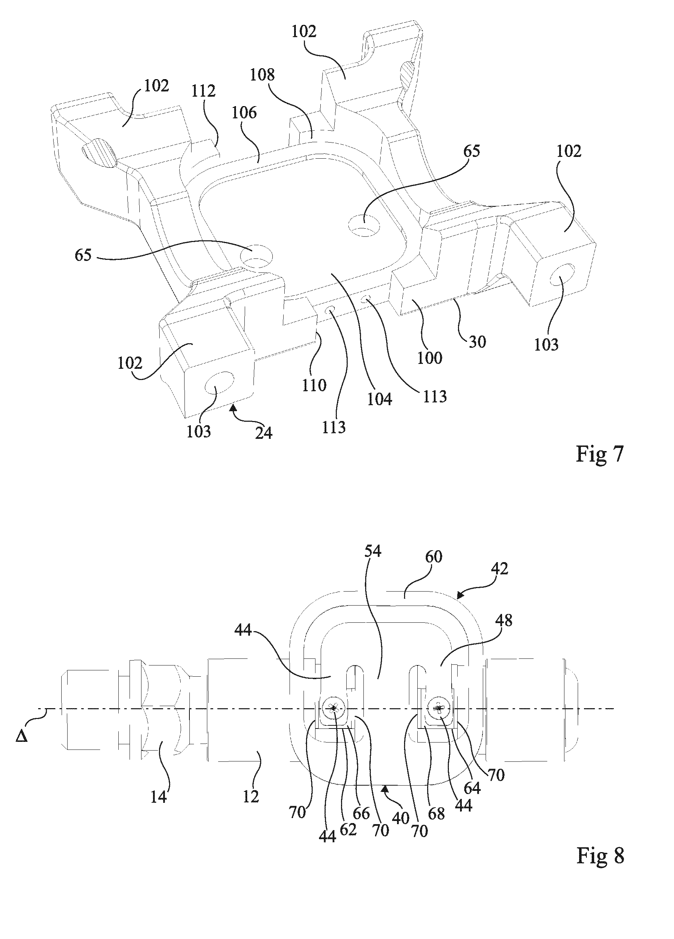

Les figures 6 et 7 sont des vues en perspective respectivement de la pièce centrale 24 et du capteur d'effort 40 et de la pièce centrale 24 seule. La pièce centrale 24 comprend une portion 100 formant un couvercle de protection du capteur d'effort 40 et qui délimite la face 30. La portion de couvercle 100 se prolonge par quatre pieds 102 destinés à être fixés au cadre 22. Les pieds 102 comprennent des ouvertures 103 pour le passage des vis 26. La portion de couvercle 100 délimite un logement 104 recevant le capteur d'effort 40. La portion de couvercle 100 comprend une région d'appui 106 plane sensiblement parallèle à l'axe de rotation Δ. La région d'appui 106 est sensiblement parallèle aux régions d'appui 88, 90. La région d'appui 106 est susceptible de venir en appui contre la portion annulaire 60 de l'organe de liaison 42 selon les efforts exercés par le cycliste sur le corps de pédale 16. Le logement 104 est notamment délimité par une paroi latérale 108 qui forme une butée empêchant le déplacement relatif entre le capteur d'effort 40 et la pièce centrale 24 parallèlement à la région d'appui 106. Toutefois, dans des conditions de fonctionnement normal, la paroi latérale 108 peut ne pas être en contact avec l'organe de liaison 42.

La portion de couvercle 100 comprend deux ouvertures 110, 112 recevant les plots 92, 94 pour la fixation de la pièce centrale 24 à la partie inférieure 20 du corps de pédale 16. Des orifices 113 de réception des vis 28 sont prévus au niveau des ouvertures 110, 112. Lorsque la pièce centrale 24 est fixée à la partie inférieure 20 du corps de pédale 16, la distance, mesurée selon une direction perpendiculaire aux régions d'appui 88, 90 et à la région d'appui 106, est strictement supérieure à l'épaisseur de l'organe de liaison 42.

L'organe de liaison 42 du capteur d'effort 40 est équipé d'au moins une jauge de déformation. Sur les figures 5 et 6, il est représenté une zone de colle 114, notamment une colle cyanoacrylate, recouvrant la patte centrale 54 de l'organe de liaison 42 du côté du tube central 12 et permettant la fixation d'au moins une jauge de déformation, non visible, à la patte centrale 54.

Selon un mode de réalisation, la jauge de déformation est adaptée à traduire la déformation de la patte centrale 54 de l'organe de liaison 42 en variation de résistance électrique. De préférence, la jauge de déformation est disposée de façon à détecter une déformation de la patte centrale 54 selon une direction longitudinale, c'est-à-dire sensiblement de l'extrémité 56 vers l'extrémité 58. A titre de variante, plusieurs jauges de déformation sont disposées sur la patte centrale 54 selon des orientations différentes.

La variation relative de la résistance de la jauge de déformation est proportionnelle, au facteur de jauge près, à la variation de longueur relative de la jauge, et donc également à la variation de longueur relative de la partie de l'organe de liaison 42 qui supporte la jauge de déformation. De manière avantageuse, on choisit une jauge qui possède un facteur de jauge élevé, pour obtenir un signal de plus grande amplitude et améliorer ainsi la sensibilité du capteur 40.

La figure 8 représente une vue de dessus du tube central 12, de l'axe 14 et du capteur d'effort 40. Comme cela apparaît sur cette figure, les régions d'appui 66, 68 sont sensiblement alignées parallèlement à l'axe de rotation Δ.

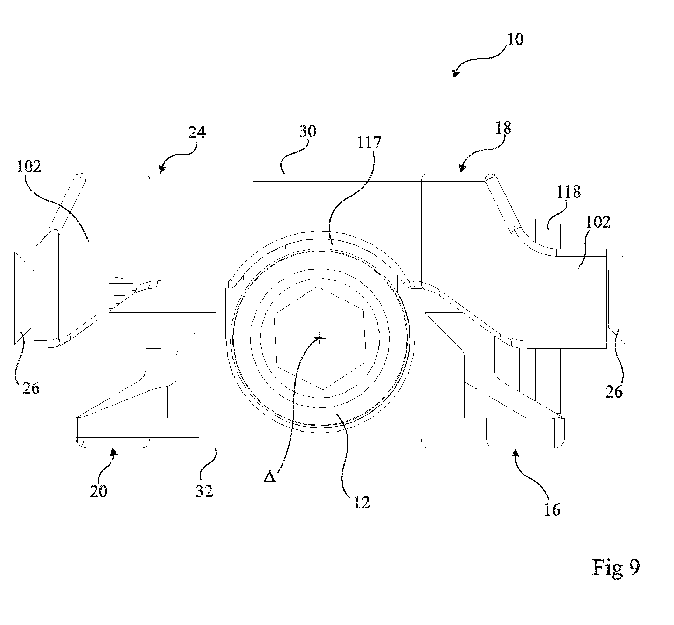

La figure 9 représente une vue de côté de la pédale dynamométrique 10, le cadre 22 de la partie supérieure 18 du corps de pédale n'étant pas représenté. Un interstice 117 est prévu entre le tube central 12 et les parties supérieure et inférieure 18, 20 du corps de pédale. Dans des conditions normales de fonctionnement, les parties supérieure et inférieure 18, 20 ne sont donc pas en contact direct avec le tube central 12 et la transmission au tube central 12 de la totalité des efforts appliqués par le cycliste sur la partie supérieure 18 ou sur la partie inférieure 20 est réalisée par l'intermédiaire du capteur d'effort 40. Les dimensions de l'interstice 117 sont déterminées de façon à maintenir le fonctionnement du capteur d'effort 40 dans une plage de fonctionnement linéaire. Lorsque les efforts appliqués au corps de pédale 16 sont trop élevés, la partie supérieure 18 ou la partie inférieure 20 vient en contact direct avec le tube central 12, ce qui permet de protéger le capteur d'effort 40.

Lorsque le cycliste appuie sur la face 30 de la partie supérieure 18 du corps de pédale, la pièce centrale 24 vient en appui contre l'organe de liaison 42 du capteur d'effort 40. Plus précisément, la région d'appui 106 vient en appui contre la face 63 de la portion annulaire 60 de l'organe de liaison 42. Les efforts exercés par le cycliste sont transmis par l'organe de liaison 42 au tube central 12. La patte centrale 54 de l'organe de liaison 42 est déformée par flexion, cette déformation étant mesurée par la jauge de déformation. Lorsque le cycliste appuie sur la face 32 de la partie inférieure 20 du corps de pédale, celle-ci vient en appui contre l'organe de liaison 42 du capteur d'effort 40. Plus précisément, les régions d'appui 88, 90 viennent en appui contre la face 61 de la portion annulaire 60. Les efforts exercés par le cycliste sont transmis par l'organe de liaison 42 au tube central 12. La patte centrale 54 de l'organe de liaison 42 est déformée par flexion, cette déformation étant mesurée par la jauge de déformation.

De façon avantageuse, comme les zones d'appui 66, 68 sont sensiblement parallèles à l'axe de rotation Δ et sensiblement alignées selon l'axe de rotation Δ, la majorité des efforts, de préférence au moins 90 % des efforts, transmis par l'organe de liaison 42 au tube central 12 sont perpendiculaires à l'axe de rotation Δ et coupent l'axe de rotation Δ.

Selon un mode de réalisation, le capteur d'effort 40 comprend une seule jauge de déformation. Selon un autre mode de réalisation, le capteur d'effort 40 comprend plusieurs jauges de déformation. Ces jauges de déformation peuvent être disposées sur l'organe de liaison pour mesurer des déformations de signes opposés, par exemple en disposant une jauge de déformation sur la face de la patte centrale 54 orientée du côté du tube central 12 et en disposant l'autre jauge de déformation sur la face de la patte centrale 54 orientée du côté de la pièce centrale 24. Ceci permet de réaliser une mesure différentielle et de supprimer les erreurs dues, par exemple, à la température.

Les signaux fournis par la jauge de déformation ou les jauges de déformation sont transmis à un circuit de traitement 118, qui est représenté de façon schématique par un boîtier sur les différentes figures. Le circuit de traitement 118 est disposé dans un logement 120 prévu entre le flasque 84 de la partie inférieure 20, les deux pieds 102 de la partie supérieure 18 et le cadre 22. A titre d'exemple, une fente 122 est prévue dans le plot de fixation 94 pour permettre le passage de fils, non représentés, entre les jauges de déformation du capteur 40 et le circuit de traitement 118. En outre, une ouverture 124 est prévue entre la pièce centrale 24 et le cadre 22 pour permettre un accès au circuit de traitement 118. L'alimentation du circuit de traitement 118 peut être réalisée par une pile ou par un générateur électrique adapté à récupérer l'énergie de rotation de la pédale autour de l'axe de rotation Δ, par exemple via une conversion électromagnétique, piézoélectrique ou électrostatique.

Selon un mode de réalisation, le circuit de traitement 118 peut comprendre un logement ouvert vers l'extérieur pour recevoir un support de mémoire amovible sous forme d'une carte de mémoire qui peut être insérée par l'ouverture. Le circuit de traitement 118 est adapté à numériser les signaux fournis par la jauge de déformation ou les jauges de déformation et à mémoriser les données numérisées. La carte de mémoire amovible peut, après l'utilisation du cycle, être enlevée pour être connectée à une unité de traitement de données et de visualisation (non représentée) adaptée à montrer les résultats de l'essai. Selon un autre mode de réalisation, le circuit de traitement 118 peut comprendre des moyens d'émission de signaux à distance.

Les données mesurées peuvent être transmises à un système d'affichage, par exemple un téléphone portable, pour informer le cycliste sur sa cadence de pédalage, la puissance utile développée, l'énergie fournie pendant une durée déterminée, etc. Les données peuvent être transmises à un système d'assistance électrique pour ajuster en temps réel la puissance d'accompagnement fournie par le système d'assistance électrique.

Selon un mode de réalisation, la pédale comprend, en outre, un capteur de l'angle d'inclinaison du corps de pédale 16 par rapport à l'axe 14. Il peut s'agir d'un codeur angulaire intégré dans le corps de pédale. Selon un autre mode de réalisation, la pédale dynamométrique 10 peut, en outre, comprendre au moins un accéléromètre.

Les efforts déterminés à partir des signaux fournis par le capteur d'effort 40 correspondent aux efforts perpendiculaires aux faces 30, 32 du corps de pédale 16. Pour déterminer le couple moteur d'entraînement en rotation de la manivelle de la bicyclette, les efforts tangentiels au cercle centré sur l'axe de la manivelle et passant par l'axe de rotation de la pédale doivent être déterminés. Ceci peut être réalisé à partir de la détermination de l'angle d'inclinaison de la pédale. Cet angle peut être déterminé à partir de la variation de l'accélération de la pédale mesurée par l'accéléromètre. La composante tangentielle moyenne de la force exercée par le cycliste et donc le couple moyen au cours d'un tour de la manivelle du pédalier peuvent ainsi être déterminés. La mesure de l'accélération permet, en outre, de déterminer la vitesse de rotation de la manivelle. La puissance moyenne fournie par le cycliste sur un tour de manivelle peut ainsi être déterminée. La détermination du couple moteur d'entraînement en rotation de la manivelle de la bicyclette et de la puissance utile fournie par le cycliste peut être obtenue comme cela est décrit dans la demande de brevet WO2012/038677.

L'organe de liaison 42 peut être inscrit dans un parallélépipède dont la base correspond à un carré dont le côté est supérieur à quelques centimètres. Ceci permet, de façon avantageuse, d'utiliser des capteurs d'efforts disponibles dans le commerce et utilisés par exemple dans les pèse-personnes. Il s'agit de capteurs d'effort réalisés en très grande série et qui sont très robustes par le retour d'expérience notamment par une optimisation de la forme du capteur et une optimisation des moyens de collage de la jauge de déformation à l'organe de liaison.

Une mesure des efforts appliqués par le cycliste est, de façon avantageuse, réalisée indépendamment de la face du corps de pédale 16 sur laquelle appuie le cycliste.

La liaison mécanique entre la partie supérieure 18 du corps de pédale et l'organe de liaison 42 et entre la partie inférieure 20 du corps de pédale et l'organe de liaison 42 est une liaison par appui plan et non une liaison mécanique rigide. Ceci permet, de façon avantageuse, d'assurer que seuls des efforts d'appui sont transmis par le corps de pédale 16 au capteur d'effort 40 et que les efforts de flexion ne sont pas transmis par le corps de pédale 16 au capteur d'effort 40. De ce fait, le capteur d'effort 40 ne mesure que la force appliquée par le cycliste qui est perpendiculaire à l'axe de rotation Δ.

Le fait que chaque région d'appui 66, 68 soit symétrique par rapport à un plan contenant l'axe de rotation Δ fait que les efforts transmis par l'organe de liaison 42 au tube central 12 sont, de façon avantageuse, sensiblement perpendiculaires à l'axe de rotation Δ. Les inventeurs ont mis en évidence que plus de 90 % des efforts transmis par l'organe de liaison 42 au tube central 12 sont perpendiculaires à l'axe de rotation Δ.

La portion annulaire 60 de l'organe de liaison 42 est inscrite dans un carré de plusieurs centimètres de côté. Cet éloignement des zones d'appui entre le corps de pédale 16 et l'organe de liaison 42 permet, de façon avantageuse, d'obtenir une transmission convenable des efforts du corps de pédale 16 vers l'organe de liaison 42 même lorsque le cycliste appuie sur le corps de pédale 16 du côté extérieur le plus éloigné de la manivelle ou du côté intérieur le plus proche de la manivelle.

De façon avantageuse, chaque pédale du cycle peut être équipée d'un capteur d'effort comme cela a été décrit précédemment. Ceci permet de déterminer les efforts fournis séparément par chaque jambe du cycliste.

L'ensemble des moyens de mesure des contraintes sont, de façon avantageuse, embarqués dans la pédale afin de permettre l'acquisition de données, sans aucune liaison filaire vers l'extérieur de la pédale, ce qui permet la mesure complète de la force appliquée contre la pédale en condition d'utilisation normale et sans fil perturbateur du mouvement.

Des modes de réalisation particuliers ont été décrits. Diverses variantes et modifications apparaîtront à l'homme de l'art. Bien qu'un mode de réalisation ait été décrit dans lequel le cadre 22 est fixé à la pièce centrale 24 par des vis 26, le cadre 22 peut être fixé à la pièce centrale 24 par tout moyen de fixation, par exemple par soudage ou par collage. En outre, le cadre 22 et la pièce centrale 24 peuvent former une pièce monolithique. En outre, bien qu'un mode de réalisation ait été décrit dans lequel la partie inférieure 20 du corps de pédale est fixée à la partie supérieure 18 du corps de pédale par des vis 28, la partie inférieure 20 peut être fixée à la partie supérieure 18 par tout moyen de fixation, par exemple par soudage ou par collage. De plus, bien qu'un mode de réalisation ait été décrit dans lequel l'organe de liaison 42 est fixé au tube central 12 par des vis 44, l'organe de liaison 42 peut être fixé au tube central 12 par tout moyen de fixation, par exemple par soudage ou par collage. En outre, bien qu'un mode de réalisation ait été décrit dans lequel un seul organe de liaison 42 est utilisé, plusieurs organes de liaison 42 peuvent être placés entre le tube central 12 et le corps de pédale 16.

## Revendications

1. Pédale (10) de bicyclette comprenant un tube (12), monté libre en rotation autour d'un axe (14), et un corps de pédale (16) comprenant au moins une première face (30) sur laquelle un cycliste est susceptible d'exercer un effort, dans laquelle le corps de pédale (16) comprend une première partie (18) et une deuxième partie (20), fixée à la première partie, le tube (12) étant disposé entre les première et deuxième parties, les première et deuxième parties étant séparées du tube (12) par un interstice (117), **caractérisé par** le corps de pédale étant relié au tube central par au moins un organe de liaison (42) comprenant une première portion (54) interposée entre le tube et la première face et équipée d'au moins une jauge de déformation et le corps de pédale n'étant pas en contact direct avec le tube.

2. Pédale selon la revendication 1, dans laquelle la première portion (54) s'étend au repos parallèlement à la première face.

3. Pédale selon la revendication 1 ou 2, dans laquelle l'organe de liaison (42) est en contact avec le tube (12) selon une première surface (66) symétrique par rapport à un plan contenant l'axe de rotation (Δ) du tube.

4. Pédale selon l'une quelconque des revendications 1 à 3, dans laquelle l'organe de liaison (42) est relié au tube (12) par au moins une vis (44) dont l'axe croise l'axe de rotation (Δ) du tube.

5. Pédale selon la revendication 3, dans laquelle l'organe de liaison (42) est en contact avec le tube (12) selon une deuxième surface (68) symétrique par rapport à un plan contenant l'axe de rotation (Δ) du tube, les première et deuxième surfaces étant alignées parallèlement à l'axe de rotation.

6. Pédale selon la revendication 1, dans laquelle la première partie (18) comprend une première région plane (106) et dans laquelle l'organe de liaison (42) comprend une deuxième région plane (63), la première région plane étant en contact plan contre la deuxième région plane.

7. Pédale selon la revendication 6, dans laquelle le corps de pédale (16) comprend une deuxième face (32) parallèle à la première face (30), dans laquelle la deuxième partie (20) comprend une troisième région plane (88, 90) et dans laquelle l'organe de liaison (42) comprend une quatrième région plane (61), la troisième région plane étant adaptée à venir en contact plan contre la quatrième région plane.

8. Pédale selon l'une quelconque des revendications 1 à 7, dans laquelle la première partie (18) comprend une pièce centrale (24) et un cadre (22), le cadre entourant au moins partiellement la deuxième partie (20), la deuxième partie étant fixée à la pièce centrale.

9. Pédale selon la revendication 8, dans laquelle la pièce centrale (24) et le cadre (22) font partie d'une pièce monolithique.

10. Pédale selon l'une quelconque des revendications 1 à 9, dans laquelle l'organe de liaison (42) comprend une deuxième portion annulaire (60) entourant la première portion (54) et reliée à une première extrémité (58) de la première portion.

11. Pédale selon l'une quelconque des revendications 1 à 10, comprenant au moins deux organes de liaison (42), chaque organe de liaison comprenant une première portion (54) équipée d'au moins une jauge de déformation s'étendant au repos parallèlement à la première face, les deux organes de liaison étant alignés selon un axe parallèle à l'axe de rotation (Δ).

12. Pédale selon l'une quelconque des revendications 1 à 11, dans laquelle l'organe de liaison (42) comprend des troisième et quatrième portions (46, 48) parallèles à la première portion (54) et reliées à une deuxième extrémité (56) de la première portion opposée à la première extrémité (58), la première portion s'étendant entre les troisième et quatrième portions, les troisième et quatrième portions étant fixées au tube (12).

13. Pédale selon l'une quelconque des revendications 1 à 12, comprenant un circuit de traitement de données (118) adapté à recevoir des signaux fournis par ladite jauge de déformation.

14. Pédale selon l'une quelconque des revendications 1 à 13, comprenant des moyens de mesure d'au moins une accélération de la pédale.

15. Pédale selon l'une quelconque des revendications 1 à 14, comprenant des moyens de mesure de l'angle d'inclinaison de ladite face (30, 32).

## Patentansprüche

1. Ein Fahrradpedal (10), wobei das Fahrradpedal ein Rohr (12) aufweist, das so eingebaut ist, dass es frei um eine Achse (14) rotieren kann, und einen Pedalkörper (16), der wenigstens eine erste Fläche (30) aufweist, auf den ein Fahrradfahrer einen Kraftaufwand ausüben kann, wobei der Pedalkörper (16) einen ersten Teil (18) und einen zweiten Teil (20) aufweist, der an dem ersten Teil befestigt ist, wobei das Rohr (12) zwischen dem ersten und dem zweiten Teil angeordnet ist, wobei der erste und der zweite Teil von dem Rohr (12) durch einen Zwischenraum (117) getrennt ist, **dadurch gekennzeichnet, dass** der Pedalkörper mit dem mittleren Rohr durch wenigstens ein Verbindungselement (42) verbunden ist, das einen ersten Teil (54) aufweist, der zwischen das Rohr und die erste Fläche eingebracht ist und mit wenigstens einem Deformationsmessgerät eingepasst ist, wobei der Pedalkörper nicht in direktem Kontakt ist mit dem Rohr.

2. Das Pedal nach Anspruch 1, wobei sich der erste Teil (54) in Ruhe parallel zu der ersten Fläche erstreckt.

3. Das Pedal nach Anspruch 1 oder 2, wobei das Verbindungelement (42) entlang einer ersten Fläche (66) in Kontakt ist mit dem Rohr (12), wobei die erste Fläche symmetrisch bezüglich einer Ebene ist, die die Rotationsachse (Δ) des Rohrs enthält.

4. Das Pedal nach einem der Ansprüche 1 bis 3, wobei das Verbindungselement (42) durch wenigstens eine Schraube (44) mit dem Rohr (12) verbunden ist, wobei deren Schaft die Rotationsachse (Δ) des Rohrs kreuzt.

5. Das Pedal nach Anspruch 3, wobei das Verbindungselement (42) entlang einer zweiten Fläche (68) in Kontakt mit dem Rohr (12) ist, wobei die zweite Fläche symmetrisch bezüglich einer Ebene ist, die die Rotationsachse
(Δ) des Rohrs enthält, wobei die erste und die zweite Fläche parallel zu der Rotationsachse ausgereichtet sind.

6. Das Pedal nach Anspruch 1, wobei der erste Teil (18) einen ersten ebenen Bereich (106) aufweist und wobei das Verbindungselement (42) einen zweiten ebenen Bereich (63) aufweist, wobei der erste ebene Bereich in ebenem Kontakt mit dem zweiten ebenen Bereich ist.

7. Das Pedal nach Anspruch 6, wobei der Pedalkörper (16) eine zweite Fläche (32) aufweist, die parallel zu der ersten Fläche (30) ist, wobei der zweite Teil (20) einen dritten ebenen Bereich (88, 90) aufweist, und wobei das Verbindungselement (42) einen vierten ebenen Bereich (61) aufweist, wobei der dritte ebene Bereich geeignet ist mit dem vierten ebenen Bereich in ebenen Kontakt zu kommen.

8. Das Pedal nach einem der Ansprüche 1 bis 7, wobei der erste Teil (18) einen mittleren Teil (24) und einen Rahmen (22) aufweist, wobei der Rahmen wenigstens teilweise den zweiten Teil (20) umgibt, wobei der zweite Teil an dem mittleren Teil befestigt ist.

9. Das Pedal nach Anspruch 8, wobei der mittlere Teil (24) und der Rahmen (22) zu einem einteiligen Teil gehören.

10. Das Pedal nach einem der Ansprüche 1 bis 9, wobei das Verbindungselement (42) einen zweiten ringförmigen Teil (60) aufweist, der den ersten Teil (54) umgibt und mit einem ersten Ende (58) des ersten Teils verbunden ist.

11. Das Pedal nach einem der Ansprüche 1 bis 10, wobei das Pedal wenigstens zwei Verbindungselemente (42) aufweist, wobei jedes Verbindungselement einen ersten Teil (54) aufweist, der mit wenigstens einem Deformationsmessgerät eingepasst ist und sich in Ruhe parallel zu der ersten Fläche erstreckt, wobei die zwei Verbindungselemente entlang einer Achse parallel zu der Rotationsachse (Δ) ausgerichtet sind.

12. Das Pedal nach einem der Ansprüche 1 bis 11, wobei das Verbindungselement (42) einen dritten und einen vierten Teil (46, 48) aufweist, der parallel zu dem ersten Teil (54) ist und die mit einem zweiten Ende (56) des ersten Teils, gegenüber dem ersten Ende (58), verbunden sind, wobei sich der erste Teil zwischen den dritten und den vierten Teil erstreckt, wobei der dritte und der vierte Teil an dem Rohr (12) befestigt sind.

13. Das Pedal nach einem der Ansprüche 1 bis 12, wobei das Pedal einen Datenverarbeitungsschaltkreis (118) aufweist, der geeignet ist Signale zu empfangen, die von dem Deformationsmessgerät bereitgestellt werden.

14. Das Pedal nach einem der Ansprüche 1 bis 13, wobei das Pedal Mittel zum Messen von wenigstens einer Beschleunigung des Pedals aufweist.

15. Das Pedal nach einem der Ansprüche 1 bis 14, wobei das Pedal Mittel zum Messen des Neigungswinkels der Fläche (30, 32) aufweist.

## Claims

1. A bicycle pedal (10) comprising a tube (12), assembled to freely rotate around an axis (14), and a pedal body (16) comprising at least one first face (30) on which a cyclist is capable of exerting an effort, wherein the pedal body (16) comprises a first portion (18) and a second portion (20), fastened to the first portion, the tube (12) being arranged between the first and second portions, the first and second portions being separated from the tube (12) by an interstice (117), **characterized by** the pedal body being connected to the central tube by at least one connecting member (42) comprising a first portion (54) interposed between the tube and the first face and fitted with at least one deformation gauge, the pedal body not being in direct contact with the tube.

2. The pedal of claim 1, wherein the first portion (54) extends, at rest, parallel to the first face.

3. The pedal of claim 1 or 2, wherein the connecting member (42) is in contact with the tube (12) along a first surface (66) symmetrical with respect to a plane containing the rotation axis (Δ) of the tube.

4. The pedal of any of claims 1 to 3, wherein the connecting member (42) is connected to the tube (12) by at least one screw (44) having its shaft crossing the rotation axis (Δ) of the tube.

5. The pedal of claim 3, wherein the connecting member (42) is in contact with the tube (12) along a second surface (68) symmetrical with respect to a plane containing the rotation axis (Δ) of the tube, the first and second surfaces being aligned parallel to the rotation axis.

6. The pedal of claim 1, wherein the first portion (18) comprises a first planar region (106) and wherein the connecting member (42) comprises a second planar region (63), the first planar region being in planar contact against the second planar region.

7. The pedal of claim 6, wherein the pedal body (16) comprises a second face (32) parallel to the first face (30), wherein the second portion (20) comprises a third planar region (88, 90) and wherein the connecting member (42) comprises a fourth planar region (61), the third planar region being capable of coming into planar contact against the fourth planar region.

8. The pedal of any of claims 1 to 7, wherein the first portion (18) comprises a central part (24) and a frame (22), the frame at least partially surrounding the second portion (20), the second portion being fastened to the central part.

9. The pedal of claim 8, wherein the central part (24) and the frame (22) belong to a monolithic part.

10. The pedal of any of claims 1 to 9, wherein the connecting member (42) comprises a second ring-shaped portion (60) surrounding the first portion (54) and connected to a first end (58) of the first portion.

11. The pedal of any of claims 1 to 10, comprising at least two connecting members (42), each connecting member comprising a first portion (54) fitted with at least one deformation gauge extending, at rest, parallel to the first face, the two connecting members being aligned along an axis parallel to the rotation axis (Δ).

12. The pedal of any of claims 1 to 11, wherein the connecting member (42) comprises third and fourth portions (46, 48) parallel to the first portion (54) and connected to a second end (56) of the first portion opposite to the first end (58), the first portion extending between the third and fourth portions, the third and fourth portions being fastened to the tube (12).

13. The pedal of any of claims 1 to 12, comprising a data processing circuit (118) capable of receiving signals delivered by said deformation gauge.

14. The pedal of any of claims 1 to 13, comprising means for measuring at least one acceleration of the pedal.

15. The pedal of any of claims 1 to 14, comprising means for measuring the inclination angle of said face (30, 32).
